# FASCICULE DE BREVET EUROPEEN

(11) **EP 0 686 760 B1**
(45) Date de publication et mention de la délivrance du brevet: **25.03.1998**
(21) Numéro de dépôt: 95401295.1
(22) Date de dépôt: 02.06.1995
(51) Int. Cl.: F02B 23/10, F02M 25/07, F02B 31/06, F02F 1/42

(54) **Moteur à combustion interne à plusieurs soupapes d'admission par cylindre**
Brennkraftmaschine mit mehreren Einlassventilen pro Zylinder
Internal combustion engine with a plurality of intake valves per cylinder

(30) Priorité: 06.06.1994 FR 9406874
(43) Date de publication de la demande: 13.12.1995
(73) Titulaire: RENAULT, 92109 Boulogne-Billancourt (FR); AUTOMOBILES PEUGEOT, 75116 Paris (FR); AUTOMOBILES CITROEN, 92200 Neuilly-sur-Seine (FR)
(72) Inventeur: Bianco, Yvan, F-78390 Bois d'Arcy (FR); Sauzet, Roland, F-91760 Itteville (FR); Taffin, Frédéric, F-92500 Rueil Malmaison (FR)
(74) Mandataire: Fernandez, Francis Lionel

(56) Documents cités:
- EP-A- 0 375 789
- DE-A- 2 853 576
- DE-A- 3 347 112
- FR-A- 2 650 629
- US-A- 4 523 560
- PATENT ABSTRACTS OF JAPAN vol. 8 no. 276 (M-346) ,18 Décembre 1984 & JP-A-59 147819 (YABMAR DIESEL KK) 24 Août 1984,
- PATENT ABSTRACTS OF JAPAN vol. 18 no. 249 (M-1604) ,12 Mai 1994 & JP-A-06 033803 (MAZDA MOTOR CORP.) 8 Février 1994,
- PATENT ABSTRACTS OF JAPAN vol. 10 no. 83 (M-466) ,2 Avril 1986 & JP-A-60 224921 (TOYOTA JIDOSHA KK) 9 Novembre 1985,

## Description

La présente invention concerne un moteur à plusieurs cylindres à combustion interne à injection directe de carburant, notamment d'essence, destiné par exemple à équiper un véhicule automobile.

L'invention concerne plus particulièrement un moteur du type comportant, pour chacun de ses cylindres, une culasse qui forme couvercle au-dessus de la partie supérieure du cylindre qui comporte une cavité qui délimite la chambre de combustion du cylindre et qui communique directement avec la partie supérieure du cylindre.

Les moteurs à injection d'essence, connus également sous le nom de moteurs à allumage commandé, peuvent être classés en deux groupes principaux, les moteurs à injection indirecte, également appelés moteurs à charge homogène, et les moteurs à injection directe.

Dans les moteurs à injection indirecte à charge homogène, l'essence est mélangée à l'air de combustion au moyen d'un injecteur situé en amont de la ou des soupapes d'admission.

Le couple moteur est régulé en actionnant un papillon formant valve qui obture une partie du collecteur d'admission en réduisant ainsi la quantité de mélange introduite dans les cylindres par les soupapes d'admission.Le mélange gazeux admis est alors homogène à l'intérieur de chaque cylindre au moment de l'allumage.

Le rendement de ce type de moteur est fortement altéré par des pertes par pompage à l'admission, surtout lorsque le moteur est utilisé à faible charge. Il en résulte une consommation importante de l'essence lorsque le moteur est peu sollicité et des émissions de dioxyde de carbone particulièrement élevées.

En outre, le fonctionnement avec un mélange pauvre en essence aux charges partielles s'avère instable du fait d'une inadéquation entre le principe de combustion en charge homogène et l'utilisation d'un excès d'air important dans le mélange gazeux. La réduction des émissions de gaz polluants, notamment des hydrocarbures imbrûlés, des oxydes d'azote et du monoxyde de carbone, est ainsi rendue extrêmement difficile avec ce type de moteur.

Dans les moteurs à injection directe à charge stratifiée, le couple moteur est régulé par la quantité d'essence qui est admise directement dans chaque cylindre du moteur. Le papillon peut alors être supprimé du conduit d'admission d'air pour réduire les pertes par pompage de l'air.

Le principe de l'injection directe permet de créer une zone riche en essence autour de la bougie d'allumage afin de provoquer un début de combustion qui se propage ensuite dans un mélange très pauvre et de minimiser ainsi les émissions d'oxydes d'azote.

L'obtention d'une bonne combustion pour ce type de moteur nécessite de maîtriser les déplacements de l'air dans la chambre de combustion, et leur adéquation avec l'orientation et la forme du jet d'injection.

A cet effet, il a déjà été prouvé dans le document FR-A-2.650.629, une conception d'un moteur à plusieurs cylindres à injection directe permettant de contrôler la stratification du mélange air/essence et d'assurer une turbulence à l'intérieur de la chambre de combustion qui est favorable à la propagation de la combustion.

Ce moteur à plusieurs cylindres à injection d'essence comprend, pour chacun de ses cylindres :
- une culasse qui forme couvercle au-dessus de la partie supérieure du cylindre et qui comporte une chambre de combustion du cylindre qui communique directement avec l'extrémité supérieure du cylindre ;
- une première et une seconde soupapes d'admission d'air frais qui débouchent toutes les deux dans la chambre de combustion ;
- une soupape d'échappement de gaz qui s'ouvre dans la chambre de combustion ; et
- une bougie d'allumage montée à travers la paroi de la chambre de combustion et dirigée vers l'intérieur de la chambre : le fond de la paroi de la chambre de combustion, opposé à l'extrémité supérieure du cylindre, comportant une cavité ; et un injecteur de carburant qui débouche dans la paroi de ladite cavité ;
L'ensemble formé par les soupapes d'admission et d'échappement, la chambre de combustion et la bougie d'allumage étant agencé de telle sorte que lorsque le piston du cylindre effectue un mouvement de translation vers le haut, l'air ou le mélange gazeux air/essence est chassé vers la chambre de combustion en créant une turbulence favorisant la combustion du mélange gazeux.

La présente invention a pour but de proposer un moteur a plusieurs cylindres du type mentionné précédemment qui permet de répondre aux normes de dépollution les plus sévères, tout en présentant une faible consommation d'essence et un rendement élevé, le compromis entre un rendement élevé et des émissions faibles de polluants devant être notamment meilleur que celui obtenu dans le cas d'un moteur faisant de plus appel à un dispositif de catalyse à trois voies.

Dans ce but, l'invention propose un moteur du type mentionné précédemment, caractérisé en ce que la première soupape d'admission et la soupape d'échappement débouchent dans la chambre de combustion en dehors de la cavité, tandis que la seconde soupape d'admission débouche dans la chambre de combustion au fond supérieur de la cavité.

Selon d'autres caractéristiques de l'invention :
- la cavité est décalée par rapport à l'axe du cylindre ;
- la bougie d'allumage est montée à travers la paroi de la cavité ;
- la soupape d'échappement s'ouvre dans la chambre de combustion en dehors de la cavité ;
- les axes des soupapes sont inclinés par rapport à l'axe du cylindre ;
- la bougie d'allumage est agencée sensiblement en position centrale dans la cavité ;
- le diamètre de la seconde soupape d'admission est inférieur au diamètre de la première soupape d'admission ;
- pour chaque cylindre, le moteur comporte un injecteur de carburant qui débouche dans la paroi de la cavité ;
- l'injecteur débouche dans la paroi de la cavité au voisinage de la bougie d'allumage ;
- le moteur comporte un injecteur de carburant débouchant dans un conduit d'admission relié à la chambre de combustion ;
- pour chaque cylindre, le moteur comporte un conduit principal d'admission qui se divise en un premier et un second conduits secondaires d'admission à chacun desquels est reliée la première et la seconde soupape d'admission, respectivement, un conduit d'échappement relié à la chambre de combustion par l'intermédiaire de la soupape d'échappement et un conduit de recirculation d'au moins une partie des gaz d'échappement qui est agencé en dérivation et qui débouche dans le premier conduit secondaire d'admission en amont de la première soupape d'admission ;
- le moteur comporte des moyens de commande du débit des gaz d'échappement qui circulent dans le conduit de recirculation ;
- les moyens de commande comportent au moins une valve aval à ouverture commandée agencée dans le conduit d'échappement en aval du raccordement du conduit de recirculation avec le conduit d'échappement, et un circuit de commande de l'ouverture de la valve aval ; et
- les moyens de commande comportent au moins une valve amont à ouverture commandée agencée dans le premier conduit secondaire d'admission en amont du raccordement du conduit de recirculation avec le premier conduit secondaire d'admission, et un circuit de commande de l'ouverture de la valve amont.

D'autres caractéristiques et avantages de l'invention apparaîtront à la lecture de la description détaillée que va suivre pour la compréhension de laquelle on se reportera aux dessins annexés dans lesquels :
- la figure 1 est une vue en section partielle selon un plan passant par l'axe du cylindre d'un exemple de réalisation d'un cylindre ;
- la figure 2 est une vue schématique théorique permettant d'illustrer le profil de la paroi de la chambre de combustion formée dans la culasse, cette vue correspondant à l'enveloppe extérieure d'un moulage de la paroi interne de la chambre de combustion ; et
- la figure 3 est une vue schématique permettant d'illustrer une variante de réalisation selon l'invention pour un des cylindres d'un moteur à combustion interne.

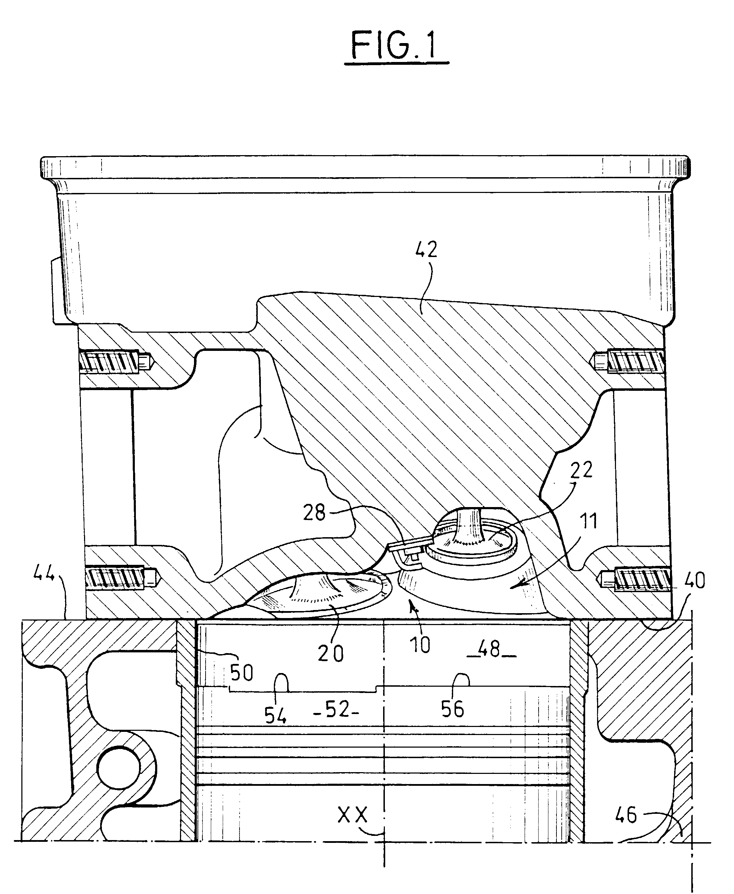

On a représenté sur la figure 1 une chambre de combustion 10 d'un moteur à combustion interne a plusieurs cylindres qui est formée dans la face inférieure 40 d'une culasse 42 qui est fixée sur la face supérieure 44 d'un bloc-cylindres 46 du moteur.

La chambre de combustion 10 est ouverte à sa partie inférieure et elle débouche directement dans la partie supérieure 48 d'un cylindre correspondant 50 dans lequel est monté un piston 52.

Conformément à l'invention, le fond de la paroi de la chambre de combustion 10, c'est-à-dire la partie supérieure de cette paroi qui est opposée à l'extrémité supérieure 48 du cylindre, comporte une cavité 11 agencé en retrait et qui est décalée latéralement par rapport à l'axe X-X du cylindre 50.

La cavité 11 peut revêtir différentes formes et elle peut par exemple être circulaire, ovoïde, élliptique, etc...

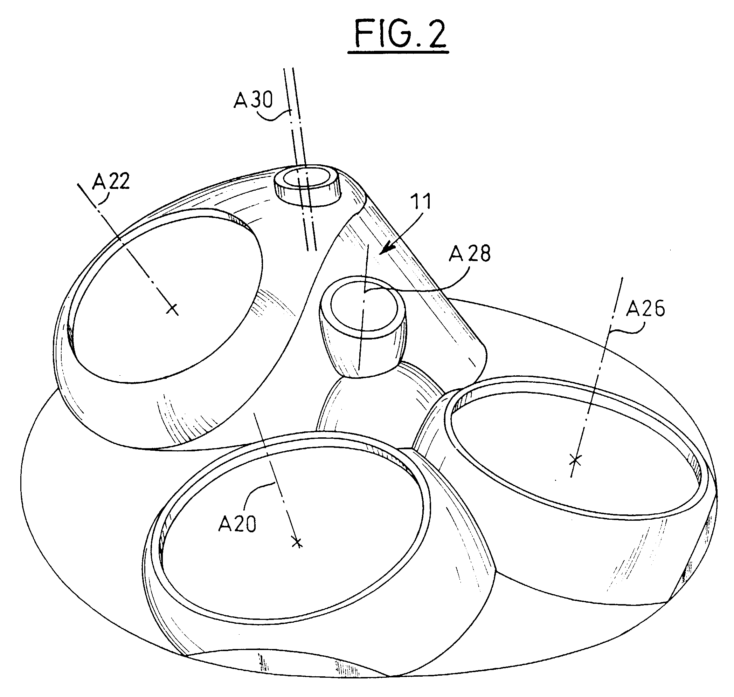

La chambre de combustion est également équipée d'un injecteur et d'une bougie d'allumage 28, dont les axes respectifs A30 et A28 sont illustrés sur la figure 2, qui débouchent dans la cavité 11. L'injecteur est de préférence monté incliné de façon à diriger le jet d'essence vers le centre de chambre de combustion pour éviter le mouillage de la paroi de la chambre de combustion.

L'admission des gaz comburants et l'échappement des gaz brûlés de la chambre de combustion sont assurés respectivement par une première soupape d'admission 20, une seconde soupape d'admission 22 et par une soupape d'échappement qui n'apparaît pas dans le plan de coupe de la figure 1 mais dont l'axe A26 est illustré sur la figure 2.

La première soupape d'admission 20 et la soupape d'échappement 26 débouchent dans la chambre de combustion 10 en dehors de la cavité 11, tandis que la seconde soupape d'admission 22 débouche dans la chambre de combustion au fond supérieur de la cavité 11.

Comme on peut le voir sur les figures 1 et 2, les sièges des deux soupapes d'admission 20 et 22 sont décalés verticalement l'un par rapport à l'autre.

Le diamètre de la première soupape d'admission 20 est de préférence supérieur au diamètre de la seconde soupape d'admission 22, comme cela est illustré schématiquement aux figures 1 et 2, de manière à favoriser le remplissage du cylindre.

Sur la figure 2, on remarque que les axes A20, A22 et A26 des première et seconde soupapes d'admission et de soupape d'échappement qui équipent chacune des chambres de combustion, sont inclinés par rapport à l'axe général X-X du cylindre 50, en s'ouvrant vers l'extérieur vers le haut.

On décrira maintenant le fonctionnement de l'exemple de réalisation du moteur à injection directe illustré aux figures 1 et 2.

Lors de la phase d'admission, le piston 52 effectue une course descendante, les soupapes d'admission 20 et 22 étant ouvertes.

L'air frais d'admission introduit dans la chambre de combustion 10 par la seconde soupape d'admission 22 balaye le volume de la cavité supérieure 11 dans laquelle la seconde soupape d'admission 22 débouche directement, en chassant les gaz brûlés résiduels vers le reste de la chambre de combustion 10.

Ainsi, lorsque le piston remonte en fin de phase de compression, une zone de gaz fortement concentrée en oxygène subsiste dans la cavité 11 à proximité de la bougie d'allumage 28.

Un évidement 24 est formé dans la face supérieure 56 du piston 52, comme cela est illustré sur la figure 1, pour éviter que cette face ne vienne en contact avec la première soupape d'admission 20 lorsque le piston 52 est en position de point mort haut. Un évidement correspondant est également prévu sous la soupape d'échappement.

Lors de l'injection du carburant, qui a lieu durant la course de remontée du piston, la zone riche en essence autour de la bougie d'allumage 28 se mélange principalement à l'air, quelle que soit la quantité de gaz brûlés contenue par ailleurs dans le reste de la chambre de combustion, ce qui permet d'assurer le début de la combustion qui se propage ensuite dans un mélange pauvre dans lequel la proportion de gaz brûlés à moins d'importance.

La conception selon l'invention du moteur permet ainsi d'opérer une double stratification, c'est-à-dire une stratification de l'essence et une stratification des gaz brûlés qui est particulièrement optimale pour le fonctionnement du moteur et notamment pour la réduction des oxydes d'azote.

La stratification des gaz brûlés permet de plus d'opérer une très forte recirculation des gaz brûlés et donc une réduction supplémentaire des émissions de polluants.

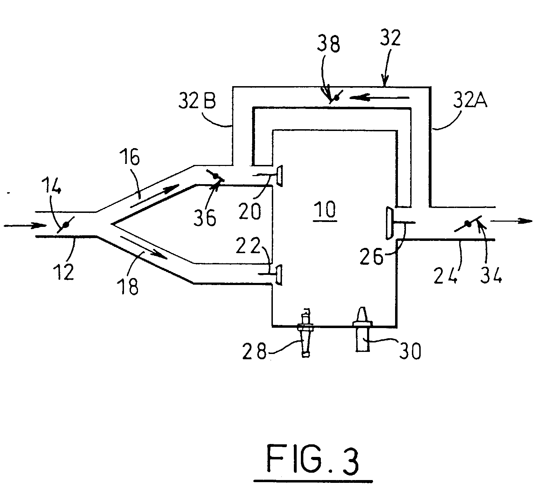

Une telle application est représentée par le schéma de la figure 3.

Sur cette figure, on voit que la chambre de combustion 10 est alimentée en air d'admission par un conduit principal amont d'admission 12 dans lequel peut être interposé un papillon 14 formant valve pour la commande du débit de gaz frais d'admission.

Le conduit principal d'admission 12 se divise en un premier conduit secondaire d'admission 16 et en un second conduit secondaire d'admission 18.

Le premier conduit secondaire 16 débouche dans la chambre de combustion 10 avec interposition de la première soupape d'admission 20, tandis que le second conduit secondaire d'admission 18 débouche dans la chambre 10 avec interposition de la seconde soupape d'admission 22.

L'échappement des gaz hors de la chambre de combustion 10 s'effectue par un conduit aval d'échappement 24 avec interposition de la soupape d'échappement 26.

Outre les trois soupapes 20, 22 et 26 et la bougie d'allumage 28, on a également illustré schématiquement sur la figure 3 un injecteur de carburant 30.

Conformément à l'invention, un conduit de recirculation 32 est monté en dérivation à l'extérieur de la chambre de combustion 10.

Une première extrémité 32A du conduit de recirculation 32 est raccordée au conduit aval d'échappement 24 entre la soupape d'échappement 26 et une valve de régulation du débit des gaz d'échappement dans le conduit 24 qui est schématisée sous la forme d'un papillon 34.

La seconde extrémité 32B, du conduit de recirculation 32 est raccordée au premier conduit secondaire d'admission 16 entre la première soupape d'admission 20 et une valve 36 de régulation du débit de gaz dans le premier conduit d'admission secondaire 16.

Enfin, le conduit de recirculation 32 peut comporter dans sa partie centrale, une valve 38 de régulation du débit dans le conduit de recirculation 32 qui est schématisée comme la valve 36 et la valve 34, sous la forme d'un papillon.

La recirculation souhaitée des gaz d'échappement est réalisée en mettant en communication le conduit d'échappement 34 avec le premier conduit secondaire d'admission 16 associé à la première soupape d'admission 20.

Le déclenchement de la recirculation et le débit de recirculation des gaz d'échappement est commandé au moyen des valves 34, 36 et 38 par le circuit de commande associé (non représenté), en fonction du point de fonctionnement du moteur.

Les gaz d'échappement qui pénètrent dans la chambre de combustion 10 par la soupape d'admission 20 remplissent la chambre de combustion à l'exception de la cavité 11 dans laquelle le balayage par l'air frais introduit par la seconde soupape d'admission 22 a pour effet d'y créer une zone riche en air qui perdure lors de la course de remontée du piston.

Cette zone riche en air suffit à assurer un démarrage correct de la combustion, et ceci quelque soit la quantité de gaz brûlés recirculés qui est présente dans le reste de la chambre de combustion. Il est ainsi possible d'assurer une combustion satisfaisante à charge partielle avec un taux de recirculation de l'ordre de 60%.

## Revendications

1. Moteur à plusieurs cylindres à combustion interne à injection directe de carburant, notamment d'essence, du type comportant, pour chacun de ses cylindres (50) :
une culasse (42) qui forme couvercle au-dessus de la partie supérieure (48) du cylindre (50) et qui comporte une chambre de combustion (10) du cylindre qui communique directement avec l'extrémité supérieure (48) du cylindre (50) ;
une première (20) et une seconde (22) soupapes d'admission d'air frais qui débouchent toutes les deux (20, 22) dans la chambre de combustion (10) ;
une soupape (26) d'échappement de gaz qui s'ouvre dans la chambre de combustion (10) ;
une bougie d'allumage (28) montée à travers la paroi de la chambre de combustion (10) et dirigée vers l'intérieur de la chambre ;
le fond de la paroi de la chambre de combustion (10), opposé à l'extrémité supérieure (48) du cylindre (50), comportant une cavité (11); et
un injecteur de carburant (30) qui débouche dans la paroi de ladite cavité (11);
l'ensemble formé par les soupapes d'admission (20, 22) et d'échappement (26), la chambre de combustion (10) et la bougie d'allumage (28) étant agencé de telle sorte que lorsque le piston (52) du cylindre (50) effectue un mouvement de translation vers le haut, l'air ou le mélange gazeux air/essence est chassé vers la chambre de combustion (10) en créant une turbulence favorisant la combustion du mélange gazeux, caractérisé en ce que la première soupape d'admission (20) et la soupape d'échappement (26) débouchent dans la chambre de combustion (10) en dehors de la cavité (11), tandis que la seconde soupape d'admission (22) débouche dans la chambre de combustion au fond supérieur de la cavité (11).

2. Moteur selon la revendication 1, caractérisé en ce que la cavité (11) est décalée par rapport à l'axe (X-X) du cylindre (50).

3. Moteur selon l'une des revendications 1 ou 2, caractérisé en ce que la bougie d'allumage (28) est montée à travers la paroi de la cavité (11).

4. Moteur selon l'une quelconque des revendications précédentes, caractérisé en ce que les axes (A20, A22, A26) des soupapes sont inclinés par rapport à l'axe (X-X) du cylindre (50).

5. Moteur selon l'une quelconque des revendications précédentes, caractérisé en ce que la bougie d'allumage (28) est agencée sensiblement en position centrale dans la cavité (11).

6. Moteur selon l'une quelconque des revendications précédentes, caractérisé en ce que le diamètre de la seconde soupape d'admission (22) est inférieur au diamètre de la première soupape d'admission (20).

7. Moteur selon l'une quelconque des revendications précédentes, caractérisé en ce que l'injecteur (30) débouche dans la paroi de la cavité (11) au voisinage de la bougie d'allumage (28).

8. Moteur selon l'une quelconque des revendications précédentes, caractérisé en ce qu'il comporte, pour chaque cylindre (50), un conduit principal d'admission (12) qui se divise en un premier (16) et un second (18) conduits secondaires d'admission à chacun desquels est reliée la première (20) et la seconde (22) soupape d'admission, respectivement, un conduit d'échappement (24) relié à la chambre de combustion (10) par l'intermédiaire de la soupape d'échappement (26), et un conduit (32) de recirculation d'au moins une partie des gaz d'échappement qui est agencé en dérivation et qui débouche dans le premier conduit secondaire d'admission (16) en amont de la première soupape d'admission (20).

9. Moteur selon la revendication 9, caractérisé en ce qu'il comporte des moyens de commande (34, 36, 38) du débit des gaz d'échappement qui circulent dans le conduit de recirculation (32).

10. Moteur selon la revendication 10, caractérisé en ce que les moyens de commande comportent au moins une valve aval (34) à ouverture commandée agencée dans le conduit d'échappement (24) en aval du raccordement (32 du conduit de recirculation (32) avec le conduit d'échappement (24), et un circuit de commande de l'ouverture de la valve aval (34).

11. Moteur selon l'une des revendication 10 ou 11, caractérisé en ce que les moyens de commande comportent au moins une valve amont (36) à ouverture commandée agencée dans le premier conduit secondaire d'admission (16) en amont du raccordement (32B) du conduit de recirculation (32) avec le premier conduit secondaire d'admission (16), et un circuit de commande de l'ouverture de la valve amont (36).

## Patentansprüche

1. Mehrzylinder-Verbrennungsmotor mit Direkteinspritzung von Kraftstoff, insbesondere Benzin, der für jeden seiner Zylinder (50) umfaßt:
einen Zylinderkopf (42), der auf dem oberen Teil (48) des Zylinders (50) einen Deckel bildet und der einen Verbrennungsraum (10) des Zylinders aufweist, der direkt mit dem oberen Ende (48) des Zylinders (50) in Verbindung steht;
ein erstes (20) und ein zweites (22) Einlaßventil für Frischluft, die beide (20, 22) in den Verbrennungsraum (10) münden;
ein Gasauslaßventil (26), das sich in den Verbrennungsraum (10) öffnet;
eine Zündkerze (28), die quer durch die Wand des Verbrennungsraumes (10) montiert und ins Innere des Raumes gerichtet ist;
wobei der Boden der Wand des Verbrennungsraumes (10), der dem oberen Ende (48) des Zylinders (50) gegenüberliegt, eine Höhlung (11) aufweist; und
eine Kraftstoff-Einspritzdüse (30), die in der Wand dieser Höhlung (11) mündet;
wobei der von den Einlaß- (20, 22) und Auslaßventilen (26), dem Verbrennungsraum (10) und der Zündkerze (28) gebildete Komplex so angeordnet ist, daß, wenn der Kolben (52) des Zylinders (50) eine Translationsbewegung nach oben durchführt, die Luft oder das Luft/Benzin-Gasgemisch zum Verbrennungsraum (10) getrieben wird und hierbei eine Turbulenz geschaffen wird, welche die Verbrennung des Gasgemisches fördert, dadurch gekennzeichnet, daß das erste Einlaßventil (20) und das Auslaßventil (26) außerhalb der Höhlung (11) in den Verbrennungsraum (10) münden, während das zweite Einlaßventil (22) am oberen Boden der Höhlung (11) in den Verbrennungsraum mündet.

2. Motor nach Anspruch 1, dadurch gekennzeichnet, daß die Höhlung (11) in bezug auf die Achse (X-X) des Zylinders (50) versetzt ist.

3. Motor nach einem der Ansprüche 1 oder 2, dadurch gekennzeichnet, daß die Zündkerze (28) quer durch die Wand der Höhlung (11) montiert ist.

4. Motor nach einem der vorhergehenden Ansprüche, dadurch gekennzeichnet, daß die Achsen (A20, A22, A26) der Ventile in bezug auf die Achse (X-X) des Zylinders (50) geneigt sind.

5. Motor nach einem der vorhergehenden Ansprüche, dadurch gekennzeichnet, daß die Zündkerze (28) im wesentlichen in einer mittleren Position in der Höhlung (11) angeordnet ist.

6. Motor nach einem der vorhergehenden Ansprüche, dadurch gekennzeichnet, daß der Durchmesser des zweiten Einlaßventils (22) kleiner als der Durchmesser des ersten Einlaßventils (20) ist.

7. Motor nach einem der vorhergehenden Ansprüche, dadurch gekennzeichnet, daß die Einspritzdüse (30) nahe der Zündkerze (28) in der Wand der Höhlung (11) mündet.

8. Motor nach einem der vorhergehenden Ansprüche, dadurch gekennzeichnet, daß er für jeden Zylinder (50) einen Hauptansaugkanal (12), der sich in einen ersten (16) und einen zweiten (18) Nebenansaugkanal teilt, mit denen jeweils das erste (20) und das zweite (22) Einlaßventil verbunden sind, einen Auslaßkanal (24), der über das Auslaßventil (26) mit dem Verbrennungsraum (10) verbunden ist, und einen Kanal (32) zur Rückführung mindestens eines Teils der Abgase umfaßt, der parallel angeordnet ist und der stromaufwärts von dem ersten Einlaßventil (20) in den ersten Nebenansaugkanal (16) mündet.

9. Motor nach Anspruch 9, dadurch gekennzeichnet, daß er Mittel zur Steuerung (34, 36, 38) der durch den Rückführkanal (32) strömenden Abgasmenge aufweist.

10. Motor nach Anspruch 10, dadurch gekennzeichnet, daß die Steuermittel mindestens ein stromabwärtiges Ventil (34) mit gesteuerter Öffnung, das in dem Auslaßkanal (24) stromabwärts von der Verbindung (32A) des Rückführkanals (32) mit dem Auslaßkanal (24) angeordnet ist, und eine Schaltung zur Steuerung der Öffnung des stromabwärtigen Ventils (34) umfassen.

11. Motor nach einem der Ansprüche 10 oder 11, dadurch gekennzeichnet, daß die Steuermittel mindestens ein stromaufwärtiges Ventil (36) mit gesteuerter Öffnung, das in dem ersten Nebenansaugkanal (16) stromaufwärts von der Verbindung (32B) des Rückführkanals (32) mit dem ersten Nebenansaugkanal (16) angeordnet ist, und eine Schaltung zur Steuerung der Öffnung des stromaufwärtigen Ventils (36) umfassen.

## Claims

1. An internal combustion engine having a plurality of cylinders with direct injection of fuel, in particular petrol, of the type comprising, for each of its cylinders (50):
a cylinder head (42) which forms a cover over the upper part (48) of the cylinder (50) and which comprises a combustion chamber (10) of the cylinder which communicates directly with the upper end (48) of the cylinder (50);
a first (20) and a second (22) fresh air inlet valve which both (20, 22) communicate with the combustion chamber (10);
a gas exhaust valve (26) which opens into the combustion chamber (10);
a spark plug (28) mounted through the wall of the combustion chamber (10) and directed towards the interior of the chamber;
the bottom of the wall of the combustion chamber (10), which bottom is opposite to the upper end (48) of the cylinder (50), comprising a cavity (11); and
a fuel injector (30) which issues in the wall of said cavity (11);
the assembly formed by the inlet valves (20, 22) and the exhaust valve (26), the combustion chamber (10) and the spark plug (28) being arranged in such a way that when the piston (52) in the cylinder (50) effects an upward translatory movement the air or the gaseous air/petrol mixture is displaced towards the combustion chamber (10), creating turbulence which promotes combustion of the gaseous mixture, characterised in that the first inlet valve (20) and the exhaust valve (26) communicate with the combustion chamber (10) outside the cavity (11) while the second inlet valve (22) communicates with the combustion chamber at the upper end of the cavity (11).

2. An engine according to claim 1 characterised in that the cavity (11) is displaced with respect to the axis (X-X) of the cylinder (50).

3. An engine according to one of claims 1 and 2 characterised in that the spark plug (28) is mounted through the wall of the cavity (11).

4. An engine according to one of the preceding claims characterised in that the axes (A20, A22, A26) of the valves are inclined with respect to the axis (X-X) of the cylinder (50).

5. An engine according to any one of the preceding claims characterised in that the spark plug (28) is arranged substantially at a central position in the cavity (11).

6. An engine according to any one of the preceding claims characterised in that the diameter of the second inlet valve (22) is smaller than the diameter of the first inlet valve (20).

7. An engine according to any one of the preceding claims characterised in that the injector (30) issues in the wall of the cavity (11) in the proximity of the spark plug (28).

8. An engine according to any one of the preceding claims characterised in that it comprises for each cylinder (50) a main inlet duct (12) which divides into a first (16) and a second (18) secondary inlet duct, to each of which is connected the first (20) and the second (22) inlet valve respectively, an exhaust duct (24) connected to the combustion chamber (10) by way of the exhaust valve (26), and a duct (32) for recirculation of at least a part of the exhaust gases which is arranged in by-pass relationship and which communicates with the first secondary inlet duct (16) upstream of the first inlet valve (20).

9. An engine according to claim 8 characterised in that it comprises control means (34, 36, 38) for controlling the flow of the exhaust gases which circulate in the recirculation duct (32).

10. An engine according to claim 9 characterised in that the control means comprise at least one downstream controlled-opening valve (34) arranged in the exhaust duct (24) downstream of the connection (32A) of the recirculation duct (32) to the exhaust duct (24), and a circuit for controlling opening of the downstream valve (34).

11. An engine according to one of claims 9 and 10 characterised in that the control means comprise at least one upstream controlled-opening valve (36) arranged in the first secondary inlet duct (16) upstream of the connection (32B) of the recirculation duct (32) to the first secondary inlet duct (16), and a circuit for controlling opening of the upstream valve (36).
